# EUROPEAN PATENT SPECIFICATION

(11) **EP 4 481 223 B1**
(45) Date of publication and mention of the grant of the patent: **12.11.2025**
(21) Application number: 24152635.9
(22) Date of filing: 18.01.2024
(51) Int. Cl.: F16D 55/227, F16D 65/00

(54) **VEHICLE BRAKE ASSEMBLY CONFIGURED FOR COLLECTING BRAKE DUST**
FAHRZEUGBREMSANORDNUNG ZUM SAMMELN VON BREMSSTAUB
ENSEMBLE FREIN DE VÉHICULE CONÇU POUR COLLECTER DES POUSSIÈRES DE FREIN

(30) Priority: 22.06.2023 KR 20230080566
(43) Date of publication of application: 25.12.2024
(73) Proprietor: HL Mando Corporation, Pyeongtaek-si, Gyeonggi-do 17962 (KR)
(72) Inventor: AHN, Dongkyun, 06517 Seoul (KR)
(74) Representative: BCKIP Part mbB

(56) References cited:
- KR-A- 20220 163 108
- US-A- 2 816 631
- US-A- 2 981 376
- US-A1- 2023 035 373

## Description

### TECHNICAL FIELD

The present invention relates to a vehicle brake assembly configured for collecting brake dust, and more specifically, to a brake assembly that is able to collect dust generated due to friction between a brake pad and a disc.

### BACKGROUND

As the importance of environmental protection is being emphasized, eco-friendliness has emerged as a major challenge for the automobile industry. Regulations on pollutants discharged from vehicles are also continuously being strengthened.

Meanwhile, pollutants discharged from vehicles may be mainly classified into pollutants discharged from exhaust systems and pollutants discharged from non-exhaust systems. The pollutants discharged from the exhaust systems are pollutants included in an exhaust gas or the like generated when an engine of a vehicle is driven and are already regulated. In the future, the pollutants discharged from non-exhaust systems will also be expected to be regulated.

In particular, among the pollutants discharged from non-exhaust systems, dust generated due to abrasion caused by friction between a brake pad and a disc during braking of a vehicle includes a large amount of harmful substances, and thus, in accordance with a situation in which regulations on harmful dust or fine dust are gradually being strengthened, there is a need for a method of minimizing the harmful dust or fine dust.

In addition, since caliper brakes generally provide a relatively stable braking force even at high speed repetitions, vehicles to which the caliper brakes are applied are relatively high-performance vehicles, and thus a large amount of dust is generated between a disc and a brake pad so that there is a more urgent need for a way to reduce the dust.

Meanwhile, in order to solve such a problem, a vehicle brake is equipped with a brake dust collector. The conventional brake dust collector is equipped with a separate bracket for fixing a housing with a built-in filter for dust collection to a part of the vehicle or to a brake caliper, which causes problems that the weight and costs of the brake are increased.

In addition, in the conventional brake dust collector, when an interval between the inner circumferential surface of a housing and the outer circumferential surface of a disc is narrow, the housing is divided into a leading side and a trailing side. Thus, separate brackets and a plurality of fastening members are required to fix the leading side and the trailing side to each other and to a part of the vehicle or brake caliper, which causes problems that not only weight and costs are increased, but also process efficiency is degraded due to the assembly of a relatively large number of parts.

Document KR 2022 0163108 A discloses a vehicle brake assembly comprising a brake dust collector.

### SUMMARY OF THE INVENTION

Therefore, it is an object of the present invention to provide a solution for a vehicle brake with a brake dust collector which allows that a separate bracket for coupling a housing of the brake dust collector to a knuckle of a vehicle or a caliper brake may be omitted.

In particular, it is an object of the present invention to provide a solution that allows a brake caliper and a housing of a brake dust collector to be firmly coupled to a knuckle of a vehicle using fastening members.

To this end, the present invention provides a brake assembly in accordance with claim 1. Advantageous embodiments of the invention are subject to the dependent claims and the description, referring to the drawings.

In accordance with the present invention, a vehicle brake assembly includes a brake caliper including a first fastening portion and a pair of brake pads disposed opposite to each other in an axial direction, e.g., at both sides of a disc, which rotates together with a wheel of a vehicle, to come into close contact with or be spaced apart from the disc by a forward or backward movement of a piston. The brake assembly further includes a brake dust collector which includes a housing including a second fastening portion and provided to surround the brake caliper and at least a portion of the disc, and a filter provided inside the housing. The brake assembly further comprises a knuckle including a third fastening portion, and a fastening member configured to simultaneously couple the first fastening portion, the second fastening portion, and the third fastening portion.

It is one of the ideas of the present invention to provide a fastening portion at the knuckle, a fastening portion at the housing of the brake dust collector, and a fastening portion at the brake caliper which are configured and arranged such that they can be connected or fastened to each other by one single fastening member such as, for example, as screw, a bolt or similar. The disc may, optionally, form part of the vehicle brake assembly.

The brake caliper may further include a caliper housing including a piston mounting portion in which the piston is embedded, and a carrier on which the pair of brake pads are installed to advance toward or retreat from the disc, to which the caliper housing is coupled to be movable forward or backward by a guide rod, and which is provided with the first fastening portion.

The housing further may include an inner housing provided with the second fastening portion, and an outer housing coupled to the inner housing. Generally, the housing may be arc shaped so that it is configured to cover a circumferential part of the disc. For example, the housing may extend along a circumferential direction between a first or leading portion and a second or trailing portion. The circumferential direction extends about or around a rotational axis of the disc. The leading and trailing portion, thus, form opposite end portions of the housing with respect to the circumferential direction. Optionally, the inner housing may comprise a plate shaped part extending transverse to the axial direction, and a curved part protruding from the plate shaped part along the axial direction.

The first fastening portion, the second fastening portion, and the third fastening portion may each be provided in a shape of a through-hole formed in an axial direction of the disc. For example, the through-holes may be positioned coaxially to each other so that the fastening member is configured to extend therethrough.

The first fastening portion, the second fastening portion, and the third fastening portion may be coupled by the fastening member coupled in an axial direction of the disc to couple the carrier and the inner housing to the knuckle. For example, the inner housing may be provided with the second fastening portion, e.g., in the form of a through hole. Optionally, the second fastening portion may be formed in the plate shaped part of the inner housing.

The first fastening portion, the third fastening portion, and the second fastening portion may be sequentially provided in a direction from one side surface of the disc to one side surface of the inner housing and coupled by the fastening member. Hence, generally, the third fastening portion, with respect to the axial direction, may be positioned between the first fastening portion and the second fastening portion. For example, the side surface of the inner housing may be a surface of the plate shaped part of the inner housing, and the knuckle may be positioned between the side surface of the inner housing and the carrier.

The fastening member may be fastened in the direction from the one side surface of the disc to the one side surface of the inner housing or in a direction from the one side surface of the inner housing to the one side surface of the disc. That is, when the fastening portions, for example, are formed as through holes, the fastening member may be introduced from the side of the carrier sequentially through the first fastening portion in the carrier, through the third fastening portion in the knuckle, and through the second fastening portion in the inner housing. Optionally, the fasting member may comprise a screw which is passed through the fastening portions as described, and a nut which is coupled to an end of the screw protruding through the second fastening portion from the inner housing to attach the inner housing, the knuckle, and the carrier to each other. Alternatively, the fastening portion may also be passed through the fastening portions in the opposite direction. In this case, the nut, if provided, may be positioned on the side of the carrier.

The first fastening portion, the second fastening portion, and the third fastening portion may be sequentially provided in a direction from one side surface of the disc to one side surface of the inner housing and coupled by the fastening member. Hence, according to this embodiment, the second fastening portion, with respect to the axial direction, may be positioned between the first fastening portion and the third fastening portion. For example, the side surface of the inner housing may be a surface of the plate shaped part of the inner housing, and a part of the inner housing, e.g., portion of the plate shaped part, may be positioned between the knuckle and the carrier.

The fastening member may be fastened in the direction from the one side surface of the disc to the one side surface of the inner housing or in a direction from the one side surface of the inner housing to the one side surface of the disc. That is, when the fastening portions, for example, are formed as through holes, the fastening member may be introduced from the side of the carrier sequentially through the first fastening portion in the carrier, through the second fastening portion in the inner housing, and through the third fastening portion in the knuckle. Optionally, the fasting member may comprise a screw which is passed through the fastening portions as described, and a nut which is coupled to an end of the screw protruding through the third fastening portion from the knuckle to attach the knuckle, the inner housing, and the carrier to each other. Alternatively, the fastening portion may also be passed through the fastening portions in the opposite direction. In this case, the nut, if provided, may be positioned on the side of the carrier.

The inner housing further may include a bent portion formed to be bent in a direction from the one side surface of the inner housing to the carrier such that the second fastening portion is provided between the first fastening portion and the third fastening portion. The bent portion, for example, may be bent from the plate shaped part of the inner housing.

A trailing portion of the housing may be provided to be longer than a leading portion in a circumferential direction of the disc. The leading portion or first portion and the trailing portion or second portion, generally, may be opposite end portions of the housing with respect to the circumferential direction. For example, with respect to a plane containing the rotational axis of the disc and a central axis of the piston, the trailing portion may be further distanced in the circumferential direction from the plane than the leading portion.

The filter may include a case in which an opening through which brake dust generated from the brake caliper flows is formed.

The first fastening portion, the second fastening portion, and the third fastening portion may be provided at each of a leading side and a trailing side of the brake pad. For example, a pair of first fastening portions, a pair of second fastening portions, and a pair of third fastening portions may be provided which are distanced to each other in a direction transverse to the axial direction, e.g., in the circumferential direction.

The filter may be provided in a trailing portion of the housing.

The filter may be provided in each of a trailing portion and a leading portion of the housing.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is an exploded perspective view illustrating a disassembled state of a vehicle brake assembly according to one embodiment of the present invention;
FIG. 2 is a perspective view illustrating an assembled state of the vehicle brake assembly according to one embodiment of the present invention;
FIG. 3 is a side view illustrating main parts of the vehicle brake assembly according to one embodiment of the present invention;
FIG. 4 is a cross-sectional view of the main parts of the vehicle brake assembly along line A-A' of FIG. 3;
FIG. 5 is a front view illustrating main parts of the vehicle brake assembly according to one embodiment of the present invention; and
FIG. 6 is a front view illustrating main parts of the vehicle brake assembly according to one embodiment of the present invention.

### DETAILED DESCRIPTION

Hereinafter, embodiments of the present invention will be described in detail with reference to the accompanying drawings. Embodiments described below are exemplarily provided to sufficiently inform those skilled in the art of the present invention. The present invention is not limited to the embodiments described below and may be embodied in other forms. In the drawings, parts that are irrelevant to the descriptions may be omitted in order to clarify the present invention, and also, for easy understanding, the sizes of components may be exaggerated to varying extents.

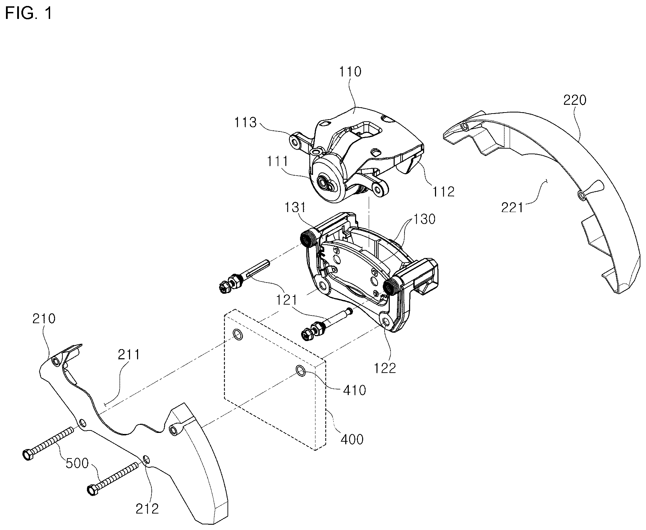

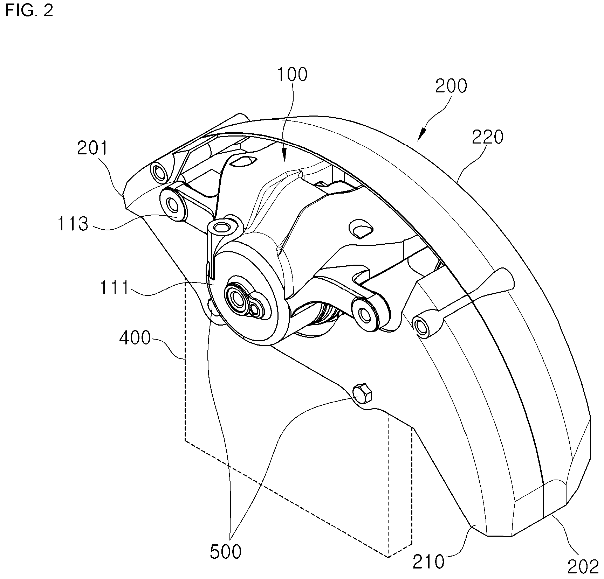

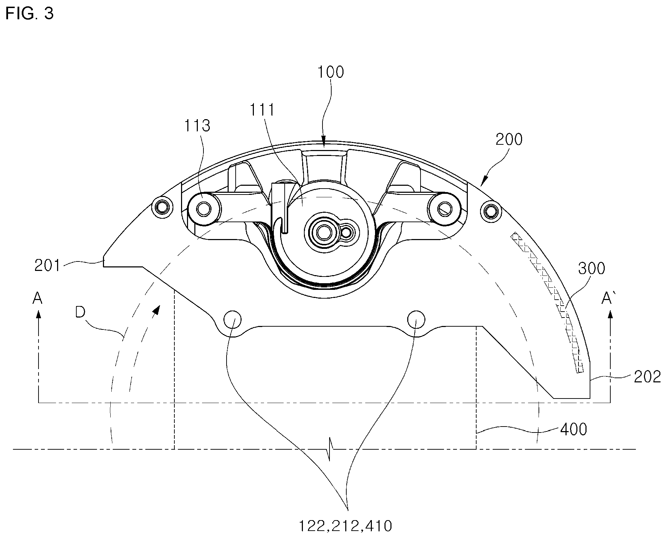

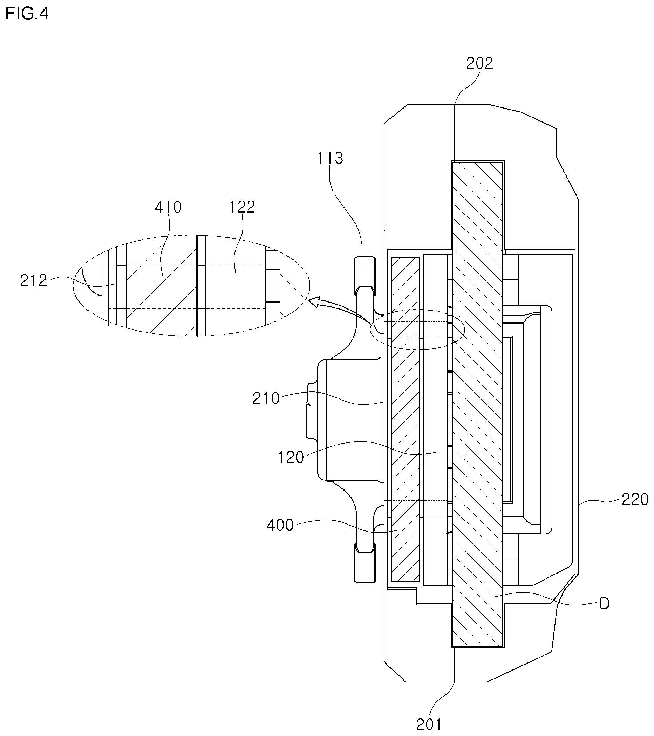

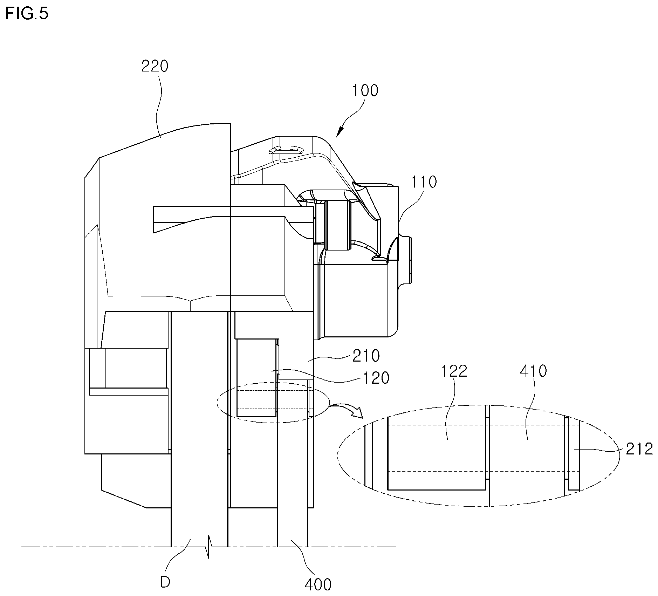

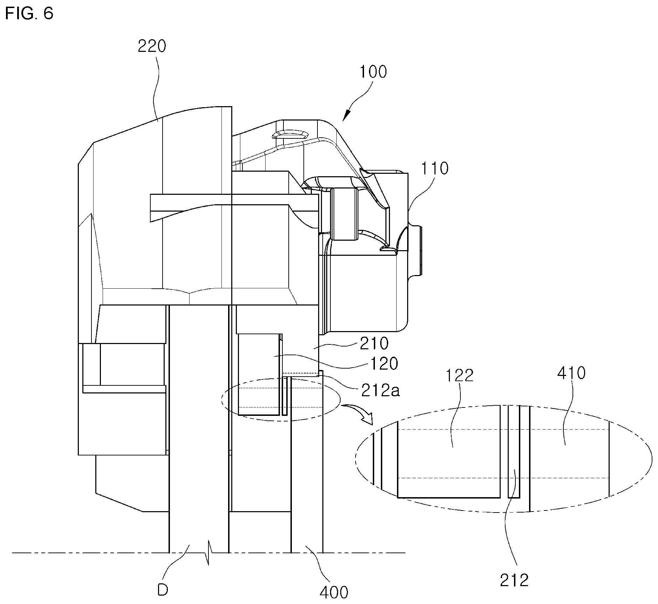

FIG. 1 is an exploded perspective view illustrating a disassembled state of a vehicle brake assembly. FIG. 2 is a perspective view illustrating an assembled state of the vehicle brake assembly. In addition, FIG. 3 is a side view illustrating main parts of the vehicle brake assembly. FIG. 4 is a cross-sectional view of the main parts of the vehicle brake assembly along line A-A' of FIG. 3. In addition, FIGS. 5 and 6 are front views illustrating main parts of the vehicle brake assembly.

Referring to FIGS. 1 to 6, the vehicle brake assembly may include a brake caliper 100, a brake dust collector having a housing 200 and a filter 300, a knuckle 400, and a fastening member 500. Optionally, a disc D may also form part of the assembly.

The brake caliper 100 may include a caliper housing 110, a carrier 120, and a brake pad 130.

The caliper housing 110 may include a piston mounting portion 111 provided at one side and a finger portion 112 arranged opposite to the mounting portion 111 with respect to an axial direction. A piston (not shown) may be embedded in the piston mounting portion 111 so as to be movable forward and backward in the axial direction, e.g., by a rotational force of a motor or a pressure of a fluid. The caliper housing 110 has an open lower surface and is provided to surround a portion of a disc D. In particular, a passage may be defined between the piston mounting portion 111 and the finger portion 112, and the disc D may extend through that passage. In addition, the caliper housing 110 may further include a pair of guide rod fastening portions 113 provided at the piston mounting portion 111.

The carrier 120 may be configured to guide a pair of brake pads 130 along the axial direction so that the brake pads 130 may advance or retreat toward or from the disc D which rotates together with a wheel. The caliper housing 110 is movably coupled to the carrier 120 by guide rods 121 so as to be movable in the axial direction to advance toward or retreat from the carrier 120. The carrier 120 is fixed to the knuckle 400 of a vehicle. Here, the guide rod 121 may be inserted and fixed from the side of the guide rod fastening portion 113 to the side of the carrier 120. Accordingly, the caliper housing 110 may be provided to advance toward or retreat from the carrier 120 according to the forward or backward movement of the piston.

Meanwhile, the carrier 120 may further include first fastening portions 122 for fastening to the knuckle 400 and the housing 200. More specifically, the first fastening portion 122 may be a through-hole formed in the axial direction. Further, the fastening portion 122 may be formed at a lower portion of each of a first side or leading side and a second side or trailing side of the brake pad 130. As an example, the first fastening portions 122 may be formed symmetrically with respect to an imaginary straight line passing through the center of the piston mounting portion 111 and the center of the disc D. The center of the piston mounting portion 111 may be defined by a central axis of the piston, for example. The center of the disc D may be defined, for example, by an axis of rotation of the disc D. In addition, in order to prevent interference between the fastening member 500 and the disc D, the first fastening portion 122 may further include a groove formed at a side facing the disc D. Thereby, a fastening member 500 such as a nut or washer may easily be seated thereon, e.g., received in the groove, without interfering with the disc D. The groove, for example, may be provided at an inner side of the carrier 120 facing the disc D.

As described above, the brake pad 130 may be disposed at each side of the disc D on the carrier 120 to come into close contact with or be spaced apart from the disc D by the forward or backward movement of the piston. To this end, the brake pad 130 may include pad springs 131 provided at the leading side and the trailing side so as to advance toward or retreat from the disc D on the carrier 120. Here, the pad spring 131 may be a leaf spring in which a plurality of bent portions are formed and may be fixedly installed on the carrier 120 to support a lower portion of the brake pad 130 at each of the leading side and the trailing side.

Accordingly, in the brake caliper 100 configured as described above, a braking force may be generated by the brake pads 130 that presses both sides of the disc D or releases the pressing according to the forward or backward movement of the piston. In addition, in the present invention, the brake caliper 100 may include various known structures and configurations in addition to the above-described structure.

The housing 200 is provided to surround the brake caliper 100 and at least a portion of the disc D such that the brake pad 130 is disposed therein. The housing 200 is coupled to the carrier 120 and the knuckle 400. To this end, the housing 200 may have an open lower surface, and when viewed from the side along the axial direction, as shown in FIG. 3, the housing 200 may be provided in an arc shape surrounding a portion of an outer circumferential surface of the disc D. Thus, generally, the housing 200 may extend along a circumferential direction in an arc shape and define an internal space that surrounds a portion of an outer circumferential surface of the disc D as well as the brake pads 130. In addition, the housing 200 may include a first portion or leading portion 201 and a second portion or trailing portion 202. The leading portion 201 and the trailing portion 202 may be arranged opposite to each other with respect to the circumferential direction. When the disc D rotates in a predefined rotation direction, as indicated schematically by the arrow shown in Fig. 3, a point at the circumference of the disc D enters the housing 200 at the leading portion 201 and exits the housing 200 at the trailing portion 200. In this case, in order to provide the filter 300 with a large collection area in the trailing portion 202 in which a relatively large amount of dust (hereinafter referred to as brake dust) generated by friction between the brake pad 130 and the disc D is discharged by the rotation of the disc D, in the housing 200, the trailing portion 202 may be provided to be longer than the leading portion 201 in a circumferential direction of the disc D.

With respect to the axial direction, the housing 200 may be divided into an inner or first housing 210 and an outer or second housing 220. For example, when the vehicle brake assembly is installed in the vehicle, the inner housing 210 is disposed at a side adjacent to the width direction center of the vehicle, and the outer housing 220 is disposed outside the inner housing 210 and fastened to the inner housing 210.

As shown in FIGS. 1 to 3, the inner housing 210 may include an inner housing opening 211 formed by opening a lower surface and a portion of a side surface such that the piston mounting portion 111 is exposed to the outside at one side and a portion of the disc D is inserted therein. Here, the inner housing opening 211 may be omitted depending on the structure or shape of the brake caliper 100. Optionally, as exemplarily shown in FIGS. 1 to 3, the inner housing 210 may include a plate shaped part extending transverse to the axial direction, e.g., axial to a central axis of the piston, and a curved portion protruding from the plate shaped portion in the axial direction and forming a cover with respect to a radial direction which is transverse to the axial direction. As further shown in FIGS. 1 to 3, a pair of second fastening portions 212 is provided in the inner housing 210. The second fastening portions 212 are aligned in the axial direction to the first fastening portions 122. As exemplarily shown in FIG. 1, the second fastening portions 212 may, for example, be formed in the plate shaped part of the inner housing 210. Meanwhile, the pair of second fastening portions 212 may be provided at the leading side and the trailing side of the brake pad 130 like the first fastening portions 122. In addition, the second fastening portion 212 may further include a bent portion or a cut portion depending on the shape of a third fastening portion 410 formed in the knuckle 400 which will be described below.

The outer housing 220 may include an outer housing opening 221 formed by opening a portion of a lower surface such that a portion of the disc D is inserted therein and may be coupled to the inner housing 210 through fastening members (not shown) such as bolts. In addition, in order to minimize the inflow of foreign materials into the housing 200 from the outside of the outer housing 220, unlike the inner housing 210, it may be advantageous to not form an opening in the remaining surfaces except the outer housing opening 221.

The filter 300 may be a component configured for collecting brake dust and may include various known shapes and materials such as a corrosion-resistant metal, a metal non-woven fabric, a ceramic, and a high-temperature-resistant synthetic resin material. The filter 300 may be provided in the internal space of the housing 200. As an example, as shown in FIG. 3, the filter 300 may be formed to have an elongated shape and, optionally, may be positioned at the trailing portion 202 along an inner peripheral surface of the housing 200. In addition, although not shown, the filter 300 may further include a cup-shaped case which includes an opening through which brake dust flows inside the trailing portion 202 and stores the brake dust. The filter 300 may be provided inside the housing 200. Additionally, or alternatively, a filter 300 may also be provided in the leading portion 201 in various forms as described above.

As an example, when the disc D rotates clockwise as shown in FIG. 3, brake dust generated from the brake caliper 100 may be discharged toward the trailing portion 202 along the flow of fluid such as air due to the rotation of the disc D and thus may be captured by the filter 300 provided on the inner peripheral surface of the housing 200 as described above.

The knuckle 400 is a part to which the wheel of the vehicle is rotatably coupled and which is coupled to the vehicle and may constitute a steering system or suspension system of the vehicle. Although not shown in detail, the knuckle 400 may include various configurations and structures such as a knuckle arm and a bearing joint. the knuckle 400 may include the third fastening portion 410 provided for fastening the brake caliper 100 and the housing 200. For example, a pair of third fastening portions 410 may be provided. The third fastening portions 410, irrespective of their number, may be positioned to be aligned in the axial direction with the first fastening portions 122 and the second fastening portions 212. That is, the pair of third fastening portion 410 may be provided at the leading side and the trailing side of the brake pad 130 like the first fastening portions 122 and the second fastening portions 212.

The fastening member 500 may include fastening components such as bolts, nuts, and washers. Generally, the fastening member 500 may pass or extend through the first fastening portion 122, the second fastening portion 212, and the third fastening portion 410, which are provided at the same axial center as described above, and thereby fix the brake caliper 100 and housing 200 to the knuckle 400. Accordingly, in the vehicle brake assembly according to the present invention, a separate bracket for coupling the housing 200 to the knuckle 400 or the brake caliper 100 may be omitted.

Referring to FIGS. 1 to 5, in the vehicle brake assembly, the carrier 120, the knuckle 400, and a surface of the inner housing 210 may be sequentially disposed along the axial direction in a direction from one side surface of the disc D to the piston mounting portion 111. In other words, the knuckle 400, with respect to the axial direction, may be positioned between the carrier 120 and the surface of the inner housing 210. Accordingly, the fastening member 500 may be sequentially coupled to the second fastening portion 212, the third fastening portion 410, and the first fastening portion 122 or may be sequentially coupled to the first fastening portion 122, the third fastening portion 410, and the second fastening portion 212. The present invention, however, is not limited to this sequence as will be explained further below by reference to Fig. 6.

In addition, the pair of first fastening portions 122, the pair of second fastening portions 212, and the pair of third fastening portion 410 may be provided at the leading side and the trailing side of the brake pad 130 to stably fix the brake caliper 100 and the housing 200 to the knuckle 400 through a pair of fastening members 500 corresponding thereto.

Accordingly, in the vehicle brake assembly, a separate bracket for coupling the housing 200 to the knuckle 400 of the vehicle or the brake caliper 100 can be omitted, thereby reducing weight and costs as well as improving the efficiency of a process of coupling with the vehicle. In particular, in the vehicle brake assembly, as described above, the brake caliper 100 and the housing 200 can be coupled to the knuckle 400 using the pair of fastening members 500, thereby reducing weight and costs as well as further improving the efficiency of a process of coupling with the vehicle.

In addition, as described above, the first fastening portion 122, the second fastening portion 212, and the third fastening portion 410 may be formed at each of the lower portions of the leading side and trailing side of the brake pad 130 to stably fix both of the carrier 120 and the housing 200 to the knuckle 400.

Referring to FIG. 6, the carrier 120, a surface of the inner housing 210, and the knuckle 400 may be sequentially disposed in a direction from one side surface of the disc D to the piston mounting portion 111. That is, it is also possible that a part of the inner housing 210, with respect to the axial direction, is positioned between the carrier 120 and the knuckle 400. Accordingly, the fastening member 500 may be sequentially coupled to the third fastening portion 410, the second fastening portion 212, and the first fastening portion 122 or may be sequentially coupled to the first fastening portion 122, the second fastening portion 212, and the third fastening portion 410.

To this end, the second fastening portion 212 may include a bent portion 212a formed to be bent in a direction from one outer surface of the inner housing 210 to the carrier 120. In addition, in the vehicle brake assembly, the structure of the second fastening portion 212 may be changed to correspond to various shapes of the knuckle 400.

In a vehicle brake assembly according to the present invention, a separate bracket for coupling a housing of the brake dust collector to a knuckle of a vehicle or a brake caliper can be omitted, thereby reducing weight and costs as well as improving the efficiency of a process of coupling with the vehicle.

In a vehicle brake assembly according to the present invention, each of a brake caliper and a housing of the brake dust collector can be coupled to a knuckle of a vehicle using a pair of fastening members, thereby reducing weight and costs as well as more improving the efficiency of a process of coupling with the vehicle.

Although specific embodiments of the vehicle brake assembly according to the present invention have been described above, it is apparent that a variety of modifications may be made without departing from the scope of the present invention.

Therefore, the scope of the present invention should not be limited to the above-described embodiments and should be determined by the following claims.

That is, the above-described embodiments should be understood as being exemplary and not limitative in every aspect. The scope of the present invention is represented by the following claims rather than the detailed description.

## Claims

1. A vehicle brake assembly, comprising:
a brake caliper (100) including a first fastening portion (122), a pair of brake pads (130) disposed opposite to each other with respect an axial direction, and a piston configured to move the brake pads (130) to come into contact with or be spaced apart from a disc (D);
a brake dust collector comprising:
a housing (200) defining an internal space and including a second fastening portion (212), the housing (200) being disposed so as to surround the brake caliper (100), and
a filter (300) configured to collect brake dust, the filter (300) being provided within the internal space of the housing (200);
a knuckle (400) including a third fastening portion (410); and
a fastening member (500) configured to simultaneously couple the first fastening portion (122), the second fastening portion (212), and the third fastening portion (410).

2. The vehicle brake assembly of claim 1, wherein the brake caliper (100) further includes:
a caliper housing (110) including a piston mounting portion (111) in which the piston is embedded; and
a carrier (120) on which the pair of brake pads (130) are installed to advance toward or retreat from the disc, wherein the caliper housing (110) is coupled to the carrier (120) by a guide rod (121) to be movable in the axial direction, and wherein the first fastening portion (122) is formed in the carrier (120).

3. The vehicle brake assembly of claim 2, wherein the housing (200) further includes:
an inner housing (210) provided with the second fastening portion (212); and
an outer housing (220) coupled to the inner housing (210).

4. The vehicle brake assembly of any one of the preceding claims, wherein the first fastening portion (122), the second fastening portion (212), and the third fastening portion (410) are each provided in form of a through-hole formed in an axial direction of the disc.

5. The vehicle brake assembly of claim 3 or 4 insofar as being dependent upon claim 3, wherein the first fastening portion (122), the second fastening portion (212), and the third fastening portion (410) are coupled by the fastening member (500) coupled in the axial direction to couple the carrier (120) and the inner housing (210) to the knuckle.

6. The vehicle brake assembly of any one of claims 3 to 5 insofar as claims 4 and 5 depend upon claim 3, wherein the first fastening portion (122), the third fastening portion (410), and the second fastening portion (212) are sequentially provided in the axial direction and are coupled by the fastening member (500).

7. The vehicle brake assembly of claim 6, wherein the fastening member (500) is fastened in a direction from the first fastening portion (122) to the second fastening portion (212) or in a direction from the second fastening portion (212) to the first fastening portion (122).

8. The vehicle brake assembly of any one of claims 3 to 5 insofar as claims 4 and 5 depend upon claim 3, wherein the first fastening portion (122), the second fastening portion (212), and the third fastening portion (410) are sequentially provided in the axial direction and coupled by the fastening member (500).

9. The vehicle brake assembly of claim 8, wherein the fastening member (500) is fastened in a direction from the first fastening portion (212) to the third fastening portion (410) or in a direction from the third fastening portion (410) to the first fastening portion (212).

10. The vehicle brake assembly of claim 8 or 9, wherein the inner housing (210) further includes a bent portion (212a) formed to be bent in a direction from a side surface of the inner housing (210) to the carrier (120) such that the second fastening portion (212) is provided between the first fastening portion (122) and the third fastening portion (410).

11. The vehicle brake assembly of any one of the preceding claims, wherein a trailing portion (202) of the housing is provided to be longer than a leading portion (201) in a circumferential direction.

12. The vehicle brake assembly of any one of the preceding claims, wherein the filter (300) includes a case in which an opening is formed, the opening allowing brake dust generated from the brake caliper (100) to flow therethrough.

13. The vehicle brake assembly of any one of the preceding claims, wherein the first fastening portion (122), the second fastening portion (212), and the third fastening portion (410) are provided at each of a leading side and a trailing side of the brake pad (130).

14. The vehicle brake assembly of claim any one of the preceding claims, wherein the filter (300) is provided in a trailing portion (202) of the housing (200).

15. The vehicle brake assembly of any one of the preceding claims, wherein the filter (300) is provided in each of a trailing portion (202) and a leading portion (201) of the housing (200).

## Patentansprüche

1. Fahrzeugbremsanordnung, umfassend:
einen Bremssattel (100), der einen ersten Befestigungsabschnitt (122), ein Paar von Bremsbelägen (130), die in Bezug auf eine axiale Richtung einander gegenüberliegend angeordnet sind, und einen Kolben, der so konfiguriert ist, dass er die Bremsbeläge (130) so bewegt, dass sie mit einer Scheibe (D) in Kontakt kommen oder auf Abstand zur Scheibe gebracht werden, aufweist;
einen Bremsstaubsammler, umfassend:
ein Gehäuse (200), das einen Innenraum definiert und einen zweiten Befestigungsabschnitt (212) aufweist, wobei das Gehäuse (200) so angeordnet ist, dass es den Bremssattel (100) umgibt, und
einen Filter (300), der so konfiguriert ist, dass er Bremsstaub sammelt, wobei der Filter (300) innerhalb des Innenraums des Gehäuses (200) vorgesehen ist;
einen Achsschenkel (400), der einen dritten Befestigungsabschnitt (410) aufweist; und
ein Befestigungselement (500), das so konfiguriert ist, dass es den ersten Befestigungsabschnitt (122), den zweiten Befestigungsabschnitt (212) und den dritten Befestigungsabschnitt (410) gleichzeitig miteinander koppelt.

2. Fahrzeugbremsanordnung nach Anspruch 1, wobei der Bremssattel (100) weiterhin aufweist:
ein Sattelgehäuse (110), das einen Kolbenbefestigungsabschnitt (111) aufweist, in dem der Kolben eingebettet ist; und
einen Träger (120), auf dem das Paar von Bremsbelägen (130) so installiert ist, dass es sich auf die Scheibe zubewegt oder sich von der Scheibe zurückzieht, wobei das Sattelgehäuse (110) durch eine Führungsstange (121) mit dem Träger (120) gekoppelt ist, um in axialer Richtung beweglich zu sein, und wobei der erste Befestigungsabschnitt (122) in dem Träger (120) ausgebildet ist.

3. Fahrzeugbremsanordnung nach Anspruch 2, wobei das Gehäuse (200) weiterhin aufweist:
ein Innengehäuse (210), das mit dem zweiten Befestigungsabschnitt (212) versehen ist; und
ein Außengehäuse (220), das mit dem Innengehäuse (210) gekoppelt ist.

4. Fahrzeugbremsanordnung nach einem der vorangehenden Ansprüche, wobei der erste Befestigungsabschnitt (122), der zweite Befestigungsabschnitt (212) und der dritte Befestigungsabschnitt (410) jeweils in Form eines Durchgangslochs vorgesehen sind, das in axialer Richtung der Scheibe ausgebildet ist.

5. Fahrzeugbremsanordnung nach Anspruch 3 oder 4, soweit von Anspruch 3 abhängig, wobei der erste Befestigungsabschnitt (122), der zweite Befestigungsabschnitt (212) und der dritte Befestigungsabschnitt (410) durch das Befestigungselement (500) gekoppelt sind, das in axialer Richtung gekoppelt ist, um den Träger (120) und das Innengehäuse (210) mit dem Achsschenkel zu koppeln.

6. Fahrzeugbremsanordnung nach einem der Ansprüche 3 bis 5, soweit die Ansprüche 4 und 5 von Anspruch 3 abhängen, wobei der erste Befestigungsabschnitt (122), der dritte Befestigungsabschnitt (410) und der zweite Befestigungsabschnitt (212) in axialer Richtung nacheinander vorgesehen und durch das Befestigungselement (500) gekoppelt sind.

7. Fahrzeugbremsanordnung nach Anspruch 6, wobei das Befestigungselement (500) in einer Richtung von dem ersten Befestigungsabschnitt (122) zu dem zweiten Befestigungsabschnitt (212) oder in einer Richtung von dem zweiten Befestigungsabschnitt (212) zu dem ersten Befestigungsabschnitt (122) befestigt ist.

8. Fahrzeugbremsanordnung nach einem der Ansprüche 3 bis 5, soweit Ansprüche 4 und 5 von Anspruch 3 abhängen, wobei der erste Befestigungsabschnitt (122), der zweite Befestigungsabschnitt (212) und der dritte Befestigungsabschnitt (410) in axialer Richtung nacheinander vorgesehen und durch das Befestigungselement (500) gekoppelt sind.

9. Fahrzeugbremsanordnung nach Anspruch 8, wobei das Befestigungselement (500) in einer Richtung von dem ersten Befestigungsabschnitt (212) zu dem dritten Befestigungsabschnitt (410) oder in einer Richtung von dem dritten Befestigungsabschnitt (410) zu dem ersten Befestigungsabschnitt (212) befestigt ist.

10. Fahrzeugbremsanordnung nach Anspruch 8 oder 9, wobei das Innengehäuse (210) weiterhin einen gebogenen Abschnitt (212a) aufweist, der so ausgebildet ist, dass er in einer Richtung von einer Seitenoberfläche des Innengehäuses (210) zu dem Träger (120) gebogen ist, so dass der zweite Befestigungsabschnitt (212) zwischen dem ersten Befestigungsabschnitt (122) und dem dritten Befestigungsabschnitt (140) vorgesehen ist.

11. Fahrzeugbremsanordnung nach einem der vorangehenden Ansprüche, wobei ein nachlaufender Abschnitt (202) des Gehäuses so vorgesehen ist, dass er in Umfangsrichtung länger als ein vorlaufender Abschnitt (201) ist.

12. Fahrzeugbremsanordnung nach einem der vorangehenden Ansprüche, wobei der Filter (300) ein Gehäuse aufweist, in dem eine Öffnung ausgebildet ist, wobei der von dem Bremssattel (100) erzeugte Bremsstaub durch die Öffnung hindurchströmen kann.

13. Fahrzeugbremsanordnung nach einem der vorangehenden Ansprüche, wobei der erste Befestigungsabschnitt (122), der zweite Befestigungsabschnitt (212) und der dritte Befestigungsabschnitt (410) jeweils an einer vorlaufenden Seite und einer nachlaufenden Seite des Bremsbelags (130) vorgesehen sind.

14. Fahrzeugbremsanordnung nach einem der vorangehenden Ansprüche, wobei der Filter (300) in einem nachlaufenden Abschnitt (202) des Gehäuses (200) vorgesehen ist.

15. Fahrzeugbremsanordnung nach einem der vorangehenden Ansprüche, wobei der Filter (300) jeweils in einem nachlaufenden Abschnitt (202) und in einem vorlaufenden Abschnitt (201) des Gehäuses (200) vorgesehen ist.

## Revendications

1. Ensemble de frein pour véhicule, comprenant :
un étrier de frein (100) présentant une première partie de fixation (122), une paire de plaquettes de frein (130) opposées l'une à l'autre dans la direction axiale, et un piston prévu pour déplacer les plaquettes de frein (130) afin qu'elles entrent en contact avec un disque (D) ou soient espacées de celui-ci ;
un collecteur de poussière de frein comprenant :
un boîtier (200) définissant un espace intérieur et présentant une deuxième partie de fixation (212), ledit boîtier (200) étant disposé de manière à entourer l'étrier de frein (100), et
un filtre (300) prévu pour recueillir la poussière de frein, ledit filtre (300) étant disposé dans l'espace intérieur du boîtier (200) ;
une articulation (400) présentant une troisième partie de fixation (410) ; et
un élément de fixation (500) prévu pour accoupler simultanément la première partie de fixation (122), la deuxième partie de fixation (212) et la troisième partie de fixation (410).

2. Ensemble de frein de véhicule selon la revendication 1, où l'étrier de frein (100) comprend en outre :
un boîtier d'étrier (110) présentant une partie de montage de piston (111) où le piston est intégré ; et
un support (120) sur lequel la paire de patins de frein (130) est installée de manière à avancer vers le disque ou s'éloigner de celui-ci, le boîtier d'étrier (110) étant raccordé au support (120) par une tige de guidage (121) de manière à être mobile dans la direction axiale, et la première partie de fixation (122) étant formée dans le support (120).

3. Ensemble de frein de véhicule selon la revendication 2, où le boîtier (200) comprend en outre :
un boîtier intérieur (210) pourvu de la deuxième partie de fixation (212) ; et
un boîtier extérieur (220) accouplé au boîtier intérieur (210).

4. Ensemble de frein de véhicule selon l'une des revendications précédentes, où la première partie de fixation (122), la deuxième partie de fixation (212) et la troisième partie de fixation (410) sont prévues chacune sous la forme d'un trou traversant ménagé dans la direction axiale du disque.

5. Ensemble de frein de véhicule selon la revendication 3 ou la revendication 4, si dépendante de la revendication 3, où la première partie de fixation (122), la deuxième partie de fixation (212) et la troisième partie de fixation (410) sont raccordées par l'élément de fixation (500) raccordé dans la direction axiale pour accoupler le support (120) et le boîtier intérieur (210) à l'articulation.

6. Ensemble de frein de véhicule selon l'une des revendications 3 à 5, si les revendications 4 et 5 sont dépendantes de la revendication 3, où la première partie de fixation (122), la troisième partie de fixation (410) et la deuxième partie de fixation (212) sont présentés séquentiellement dans la direction axiale et sont raccordées par l'élément de fixation (500).

7. Ensemble de frein de véhicule selon la revendication 6, où l'élément de fixation (500) est fixé dans une direction allant de la première partie de fixation (122) à la deuxième partie de fixation (212) ou dans une direction allant de la deuxième partie de fixation (212) à la première partie de fixation (122).

8. Ensemble de frein de véhicule selon l'une des revendications 3 à 5, si les revendications 4 et 5 sont dépendantes de la revendication 3, où la première partie de fixation (122), la deuxième partie de fixation (212) et la troisième partie de fixation (410) sont présentées séquentiellement dans la direction axiale et raccordées par l'élément de fixation (500).

9. Ensemble de frein de véhicule selon la revendication 8, où l'élément de fixation (500) est fixé dans une direction allant de la première partie de fixation (212) à la troisième partie de fixation (410) ou dans une direction allant de la troisième partie de fixation (410) à la première partie de fixation (212).

10. Ensemble de frein de véhicule selon la revendication 8 ou la revendication 9, où le boîtier intérieur (210) comprend en outre une partie pliée (212a) formée de manière à être pliée dans une direction allant d'une surface latérale du boîtier intérieur (210) au support (120), de sorte que la deuxième partie de fixation (212) est présentée entre la première partie de fixation (122) et la troisième partie de fixation (410).

11. Ensemble de frein de véhicule selon l'une des revendications précédentes, où une partie arrière (202) du boîtier est prévue de manière à être plus longue qu'une partie avant (201) dans la direction circonférentielle.

12. Ensemble de frein de véhicule selon l'une des revendications précédentes, où le filtre (300) comprend un boîtier où est formée une ouverture, ladite ouverture permettant l'écoulement de la poussière de frein générée par l'étrier de frein (100).

13. Ensemble de frein de véhicule selon l'une des revendications précédentes, où la première partie de fixation (122), la deuxième partie de fixation (212) et la troisième partie de fixation (410) sont disposées sur un côté avant et sur un côté arrière de la plaquette de frein (130).

14. Ensemble de frein de véhicule selon l'une des revendications précédentes, où le filtre (300) est disposé dans une partie arrière (202) du boîtier (200).

15. Ensemble de frein de véhicule selon l'une des revendications précédentes, où le filtre (300) est disposé dans une partie arrière (202) et une partie avant (201) du boîtier (200).
